# FASCICULE DE BREVET EUROPEEN

(11) **EP 0 574 872 B1**
(45) Date de publication et mention de la délivrance du brevet: **01.05.1996**
(21) Numéro de dépôt: 93109519.4
(22) Date de dépôt: 15.06.1993
(51) Int. Cl.: B31F 1/28, B32B 31/00

(54) **Dispositif de chauffage de laize au sein d'une machine de fabrication de carton ondulé**
Heizgerät zum Erhitzen eines Papierbandes in einer Wellpappen-Herstellungsmaschine
Device for heating a paper web inside a corrugated cardboard making machine

(30) Priorité: 19.06.1992 CH 1934/92
(43) Date de publication de la demande: 22.12.1993
(73) Titulaire: PETERS MASCHINENFABRIK GmbH, D-22525 Hamburg (DE)
(72) Inventeur: Johannsen, Joerg, D-2400 Lübeck 1 (DE); Golberg, Claus-Peter, D-2358 Kaltenkirchen (DE)
(74) Mandataire: Colomb, Claude

(56) Documents cités:
- BE-A- 682 805
- DE-A- 553 252
- US-A- 2 219 065
- US-A- 2 487 647
- US-A- 3 861 057
- US-A- 5 156 714

## Description

La présente invention est relative à un dispositif de chauffage de laize, c'est-à-dire de bandes de papier ou de carton, utilisé notamment dans la station de préchauffage ou intégré directement en amont de la station d'encollage au sein d'une machine appelée "onduleuse" conçue pour la fabrication du carton.

On distingue usuellement trois sections successives dans une machine onduleuse : une première section dite "simple face" où sont réalisés un ou plusieurs papiers ondulés par ondulation d'une feuille de papier passant entre deux cylindres cannelés et collage immédiat sur une feuille de parement; une seconde section dite "double face" où les papiers ondulés précédents sont encollés, puis maintenus les uns sur les autres avec une pression uniforme lors du passage sur des tables horizontales de chauffage provoquant une saisie rapide de la colle et enfin une partie dite "sèche" de découpe et d'empilage de cartons ainsi fabriqués.

Il est courant d'installer une station dite "de préchauffage" en amont de la station d'encollage située à l'entrée de la seconde section double face afin de réajuster à une valeur prédéterminée la température, donc l'humidité, des laizes pénétrant dans cette section. En effet, des différences de température, dues par exemple à des changements de vitesse de production, à des différences de température dans le stock de bobines de papier ou à l'humidité ambiante, peuvent affecter notablement l'opération de collage couche sur couche effectuée en aval, donc la qualité finale du carton ondulé.

Les stations de préchauffage actuelles comprennent plusieurs cylindres superposés, un pour chaque laize, chauffés par une circulation intérieure de vapeur d'eau à haute température. Le diamètre de chaque cylindre préchauffeur est de l'ordre de 90 centimètres, et chacun de ces cylindres, monté sur paliers, est entraîné par la friction de la laize en mouvement. Une paire de bras disposés de part et d'autre de chaque cylindre, et mobile en rotation selon l'axe du cylindre, tient un rouleau embarreur parallèle à ce cylindre. La position angulaire des bras, donc du rouleau embarreur, peut être modifiée à volonté par un moteur électrique afin de modifier l'angle d'embarrage, c'est-à-dire vu en coupe transversale, l'angle de contact de la laize avec la surface cylindrique. L'angle initial d'embarrage, compris entre 80 et 320 degrés est sélectionné selon les caractéristiques du papier ou du carton ondulé, les variations d'angle permettant alors d'assurer une température de sortie constante.

Par ailleurs, la séparation entre la station de préchauffage et la station d'encollage rendue nécessaire par les différences de dimensions verticales implique d'une part une augmentation de la place occupée au sol, et d'autre part une perte inutile de température de la laize le long du trajet entre ces deux stations. Il est alors fréquent de devoir remédier à cette perte de chaleur intermédiaire en installant dans la station d'encollage un cylindre également chauffé par une circulation de vapeur d'eau à haute température juste avant le cylindre encolleur.

Toutefois, ce type de cylindre préchauffeur est sujet à de nombreux entretiens et/ou réparations au niveau des paliers, entretiens nécessités pour assurer l'étanchéité de la vapeur d'eau utilisée. De plus, de toute la partie cylindrique non recouverte par la laize rayonne une chaleur inutile, constituant à la fois un important gaspillage d'énergie et un danger potentiel pour les conducteurs de la machine ou le personnel d'entretien. Enfin, cette régulation de température de sortie par variations d'angle d'embarrage s'avère mécaniquement et électrotechniquement compliquée donc coûteuse à construire.

On connaît par ailleurs, notamment dans la première partie de la seconde section double face, un autre dispositif de chauffage de laize comprenant une succession de tables horizontales, chacune constituée d'une série de tubes horizontaux de section carrée, accolés côte à côte. Une telle solution est décrite dans le brevet DE-C-553 252. Chacune de ces tables est chauffée individuellement par le passage, dans un seul canal, de vapeur d'eau à haute température pour réaliser un profil plus ou moins décroissant de température dans le sens de déplacement de la laize. Dans ce dispositif, la laize doit être maintenue plaquée contre la table, ce qui est réalisé par-dessus, soit par une succession de poids sous la forme de rouleaux transversaux, soit par un caisson supérieur pressurisé.

Il a toujours été considéré comme irréaliste de remplacer les rouleaux de préchauffage en amont de la station d'encollage par des tables chauffantes comme dans la section double face car, celles-ci étant planes, il est impératif d'y maintenir la laize plaquée d'une manière ou d'une autre, par des équipements obligatoirement lourds et onéreux. De plus, au moins deux tables étant nécessaires pour assurer un préchauffage complet, il conviendrait de quadrupler la surface occupée au sol.

Il est également connu d'utiliser une table arquée comprenant des tubes formant des conduits de vapeur pour chauffer des bandes de papier ou de carton, cela dans des endroits différents de l'onduleuse. Une telle utilisation est décrite dans le brevet BE-A-682 805. Cette solution présente, elle-aussi, pratiquement les mêmes inconvénients que ceux mentionnés ci-avant.

Le but de la présente invention est de supprimer les inconvénients précités en proposant un dispositif de préchauffage ou de chauffage complémentaire en amont de la station d'encollage, permettant d'imposer à la laize une température prédéterminée, et ce avec un contrôle beaucoup plus facile et beaucoup plus exact qu'avec des rouleaux ou une table chauffante arquée unique. De plus, la conception de ce dispositif doit entraîner une diminution notable des pertes thermiques inutiles, soit une économie d'énergie importante, une diminution de l'entretien nécessaire ainsi qu'une diminution de la place au sol nécessairement occupée.

Ces buts sont réalisés, dans le cas d'un préchauffage de correction et d'appoint, par un dispositif constitué de tables arquées formées d'une série de tubes horizontaux de section carrée et accolés côte à côte, ces tubes étant reliés entre eux en leurs extrémités par des conduits de renvoi de façon à ne former qu'un canal pour le passage de vapeur d'eau à haute température et comprenant deux tables arquées montées en alignement l'une au-dessus de l'autre avec leur face convexe orientée respectivement vers le haut et vers le bas pour former, avec deux tambours situés aux extrémités conjointes des tables, une unité de chauffage ayant un volume cylindrique de section ovale aplatie.

Ainsi, grâce à la forme arquée donnée aux tables, il est possible de maintenir la laize plaquée contre celle-ci au seul moyen d'une paire de rouleaux de guidage : un à l'entrée et un à la sortie. Ces rouleaux de faible diamètre étant situés à proximité de l'entrée et de la sortie de la table, l'ensemble s'avère étroit en hauteur, ce qui permet de l'intégrer à l'intérieur du cadre de la station d'encollage, et non plus de manière proéminente à l'entrée comme pour le cylindre de chauffage, tout en permettant de diminuer la hauteur globale de cette station. Etant intégrée, cette table chauffée ne peut plus être atteinte par inadvertance par le personnel d'entretien, ce qui améliore la sécurité.

Il est alors possible de faire passer la laize sur tout le pourtour de cette unité de chauffage ovale aplatie grâce à une simple paire de rouleaux de guidage d'entrée et de sortie et grâce également aux tambours d'extrémité, tout en maintenant la laize bien plaquée sur chacune des tables arquées supérieure et inférieure, et ce dans un encombrement bien plus faible que la station de préchauffage usuel. De plus on peut alors réguler la température avec une très grande précision à une valeur juste suffisante en ne faisant passer qu'une quantité prédéterminée de vapeur d'eau dans les tubes constituant le pourtour de cette unité de chauffage ovale aplatie, et ce en jouant simplement sur la pression d'entrée de cette vapeur d'eau, la perte de charges dans le circuit étant définie une fois pour toute.

Avantageusement, des ouvertures sont ménagées entre les tubes ou une suite de tubes accolés et l'unité de chauffage ovale est fermée en ses deux extrémités par deux parois latérales définissant ainsi un espace intérieur mis sous pression par une amenée d'air comprimé, cet air s'échappant ensuite par ces ouvertures. On peut alors créer un léger coussin d'air entre la laize et l'unité de chauffage ovale aplatie, l'épaisseur de ce coussin d'air constituant un second paramètre avantageux pour moduler instantanément la quantité de chaleur transférée à la laize, ce coussin d'air diminuant par ailleurs les efforts de friction générés lors du passage de cette laize.

Selon une première variante, l'unité de chauffage ovale aplatie est installée obliquement dans un cadre, le grand axe de cette unité faisant un angle compris entre 10 et 80 degrés avec le sens de déplacement horizontal de la laize, une paire verticale de rouleaux de guidage étant disposée en amont proche de l'extrémité haute, la laize passant par-dessus le rouleau inférieur de guidage, par la face inférieure de l'unité de chauffage ovale aplatie, puis autour du tambour d'extrémité inférieur, puis par la face supérieure, et ensuite autour du rouleau supérieur.

Selon une autre variante, l'unité de chauffage ovale aplatie est installée obliquement dans un cadre, le grand axe de cette unité faisant un angle compris entre 100 et 170 degrés avec le sens de déplacement horizontal de la laize, une paire verticale de rouleaux de guidage étant disposée en aval proche de l'extrémité haute, la laize passant autour du rouleau supérieur de guidage, par la face supérieure de l'unité de chauffage ovale aplatie, puis autour du tambour d'extrémité inférieur, puis par la face inférieure, et ensuite par-dessus le rouleau inférieur.

Lorsque ce dernier dispositif est prévu pour le préchauffage en amont de la station d'encollage située à l'entrée de la section double face de l'onduleuse, l'unité de chauffage ovale aplatie est avantageusement installée directement dans le cadre amont de cette station d'encollage, le tambour d'extrémité inférieur étant monté sur un pivot horizontal, le tambour d'extrémité supérieur étant tenu par un vérin sous-jacent en une première position dite "de travail" sensiblement au niveau du premier tambour d'introduction et de guidage de la station d'encollage, ou en une seconde position abaissée dite "d'introduction de laize", le rouleau de guidage supérieur étant alors simultanément déplacé en amont. Avantageusement, les moyens de fixation de l'unité de chauffage dans le cadre sont démontables pour permettre de sortir cette unité de chauffage ovale aplatie, par la face amont de la station d'encollage.

L'invention est décrite ci-après de façon plus détaillée à l'aide d'exemples d'exécution sans caractère limitatif et illustrés à l'aide des dessins annexés dans lesquels :
- la figure 1 est une vue schématique de côté d'une station d'encollage intégrant des tables arquées de chauffage complémentaires,
- la figure 2 est une vue schématique en perspective d'une unité de préchauffage ovale aplatie selon l'invention,
- la figure 3 est une vue schématique de côté d'une station d'encollage intégrant des unités de préchauffage ovales aplaties.

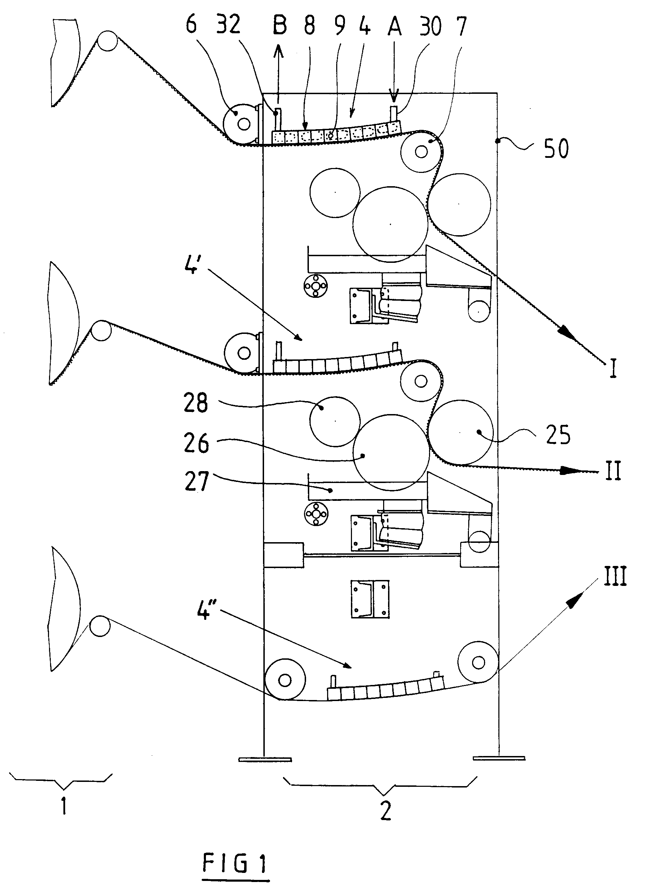

Sur la figure 1 est illustrée une station d'encollage 2 située en aval d'une station de préchauffage 1 dont on observe que partiellement les gros cylindres chauffeurs. Cette station d'encollage 2 comprend un cadre 50 supportant ici deux dispositifs d'encollage composés chacun d'un cylindre encolleur 26 en vis-à-vis d'un rouleau porteur 25 ce cylindre encolleur récoltant la colle d'un bac 27 avant de rencontrer un cylindre essuyeur 28 dosant la quantité de colle amenée sur les crêtes des cartons simple face I ou II. Plus particulièrement dans cette station, les rouleaux préchauffeurs à l'entrée sont ici remplacés par des tables chauffantes arquées 4, 4' et 4'' complétées par des rouleaux de guidage d'entrée 6 et de sortie 7 situés de telle sorte que leur point de contact avec le carton simple face I ou II (ou avec la feuille de parement III) soit à niveau avec le bord de ces tables. Ainsi ces feuilles sont en permanence appliquées en contact étroit et ferme contre ces tables.

Chaque table arquée 4 est composée d'une succession de tubes carrés 8 accolés côte à côte et reliés entre eux par des pièces de renvoi 9 de telle sorte à ne former qu'un seul conduit unique en serpentin. L'épaisseur des tubes est faible, de l'ordre de 4 millimètres, pour éviter que cette construction ne constitue une masse thermique, le préchauffage étant alors surtout dépendant de la quantité de vapeur d'eau à haute température (A) entrant dans le premier conduit flexible 30 et ressortant sous forme de vapeur condensée (B) par le second conduit flexible 32.

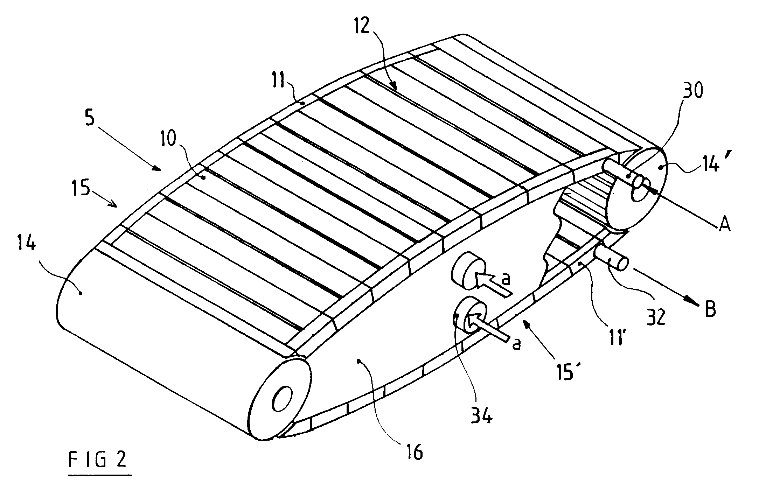

Sur la figure 2 est illustrée une unité de préchauffage 5 de laize ayant une forme cylindrique qui, vue de côté, a une forme ovale aplatie, ou, en d'autres termes, une forme de lentille. A titre d'exemple, le petit axe de cette lentille peut être de l'ordre de 30 centimètres pour un grand axe de l'ordre de 1,20 mètre avec un rayon de courbure des faces de la lentille de l'ordre de 1,50 mètre. Cette unité de chauffage ovale aplatie 5 est en fait constituée d'une table arquée supérieure 15 et d'une table arquée inférieure 15' situées en vis-à-vis avec leur face convexe orientée vers l'extérieur, les deux extrémités amont et les deux extrémités aval aboutissant, respectivement, sur un rouleau de renvoi 14, 14'.

Chaque table arquée est réalisée de manière identique à la table 4 de la figure 1, c'est-à-dire que l'on y retrouve une succession de tubes carrés 10 accolés côte-à-côte et reliés entre eux par des pièces de renvoi 11, 11' de telle sorte à ne former qu'un seul conduit unique en serpentin. La vapeur d'eau à haute température (A) entre dans le premier conduit flexible 30 et ressort sous forme de vapeur condensée (B) par le second conduit flexible 32.

Cette unité de chauffage ovale aplatie 5 en forme de lentille est par ailleurs fermée de part et d'autre par deux parois latérales 16 créant ainsi un espace intérieur. De plus, une série d'orifices 12 sont ménagés à intervalles réguliers dans chaque jointure de tubes carrés 10. Ces orifices 12 transversaux sont de préférence des fentes réalisées en séparant deux tubes côte à côte, ou des orifices rectangulaires, oblongs, circulaires percés dans une sur-épaisseur. Ainsi, on peut pressuriser l'espace intérieur en injectant de l'air comprimé (a) par des entrées 34a ménagées dans les parois latérales 16, cet air sous pression passant au travers des fentes 12 pour créer un coussin d'air uniforme sur tout le pourtour de cette unité ovale aplatie.

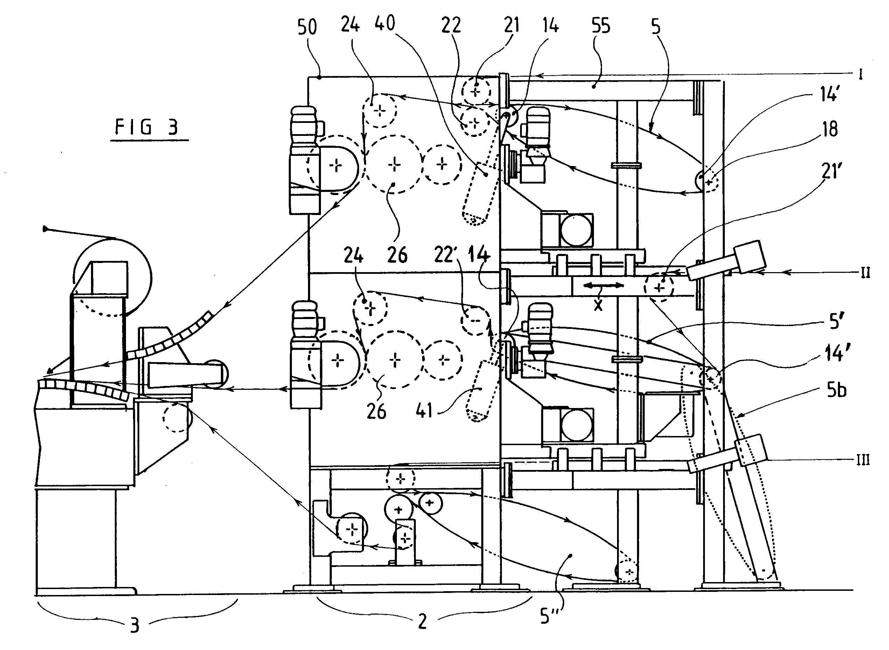

La figure 3 illustre l'installation d'une unité ovale aplatie de préchauffage dans le cadre amont 55 d'une station d'encollage 2 située elle même en amont de l'entrée de la seconde section double face 3 de l'onduleuse. Dans cette station d'encollage, des bandes de carton simple face I et II sont guidées par des rouleaux d'entrée 24 vers des rouleaux encolleurs 26 entraînés en rotation par des moteurs. Une bande de papier de parement III est également introduite dans la station d'encollage et passe autour d'une unité de chauffage ovale aplatie 5''.

Comme bien illustré sur cette figure 3, le cadre aval 55 forme trois volumes : un supérieur et un intermédiaire sensiblement cubique, ainsi qu'un inférieur sensiblement parallélépipédique. Des unités de préchauffage de forme ovale aplatie peuvent avantageusement être installées obliquement dans ces volumes du fait de leur hauteur relativement faible, de l'ordre de 30 centimètres à comparer au diamètre de l'ordre de 90 centimètres d'un tambour de préchauffage conventionnel.

Les unités ovales aplaties supérieures 5 et intermédiaire 5' sont ancrées dans le cadre 55 en leurs rouleaux inférieurs 14' par des axes transversaux 18 autorisant un mouvement en rotation autour de cet axe, leur rouleaux supérieurs 14 étant tenus par des vérins à double action de préférence pneumatiques 40 et 41.

L'unité ovale aplatie supérieure 5 est illustrée sur cette figure 3 en position de travail, c'est-à-dire que son rouleau supérieur 14 est levé par le vérin 40 de manière à être à niveau avec une paire de rouleaux de guidage verticaux 21 et 22 eux-mêmes sensiblement à niveau avec le rouleau de guidage d'entrée 24 du dispositif d'encollage correspondant. Une bande de carton simple face I, respectivement II, passe alors autour du rouleau de guidage supérieur 21 puis par-dessus la face supérieure de la première table arquée de l'unité ovale aplatie 5, contourne le rouleau arrière 14' pour remonter le long de la face inférieure constituée par la seconde table arquée, ce papier restant tendu de par le passage ultérieur par-dessus le rouleau inférieur de guidage 22 et le rouleau de guidage 24 de l'encolleuse. Un parcours équivalent est effectué par le papier de parement III autour de l'unité ovale aplatie inférieure 5''.

L'unité ovale aplatie intermédiaire 5' est illustrée sur cette figure 3 en position d'introduction et d'installation de la bande de carton simple face II, c'est-à-dire que le vérin pneumatique 41 a abaissé le rouleau d'extrémité supérieure de cette unité et que, simultanément, le tambour supérieur de guidage 21' a été déplacé en aval par une translation (x). L'installation de cette bande de carton simple face II est alors grandement facilitée de par l'espace libre important laissé à disposition. Une fois cette bande installée, le tambour de guidage 21' est ramené en amont proche de son tambour correspondant 22' et le vérin pneumatique 41 est actionné pour soulever à nouveau le rouleau d'extrémité supérieure, et avec lui l'unité ovale aplatie 5'.

En fonctionnement, on peut se contenter d'injecter une quantité de chaleur exactement prédéterminée et plus faible qu'auparavant du fait que la laize passe sur tout le pourtour de cette unité. Cet apport précis de chaleur est effectué en modulant la pression d'injection de la vapeur d'eau dans les tubes de section carrée, ce qui revient en fait à moduler la quantité instantanée de vapeur d'eau présente dans ces cylindres. Par ailleurs, la surpression appliquée dans l'espace intérieur de l'unité est régulée initialement à un niveau juste suffisant pour créer un très mince coussin d'air réduisant seulement les forces de friction. Par contre, si pour une raison ou pour une autre, on constate au moyen de capteurs thermiques (non représentés), situés entre des rouleaux de guidage 21 et 24, que la température des laizes devient trop importante, il suffit d'augmenter rapidement la pression d'air dans l'espace intérieur pour augmenter alors l'épaisseur du coussin d'air entre les tubes de chauffage et la laize, ce qui diminue fortement le transfert de chaleur. Cette rapidité de réaction est avantageuse lors de variations momentanées de la vitesse de production. Par contre, si la température de sortie des laizes devient systématiquement trop faible ou trop importante, la simple variation de pression d'injection de la vapeur d'eau corrige rapidement la température générale des tubes du fait de leur faible inertie thermique.

Sur le côté droit de la figure 3 est illustrée une unité ovale aplatie 5b qui a été sortie de la station d'encollage, au moyen d'un train de chaînes, en une position permettant son nettoyage et/ou sa réparation de manière aisée. Comme on peut le constater, le rouleau d'extrémité supérieure restant en permanence dans une glissière, le train de chaînes n'a eu à supporter que la moitié du poids pris au niveau du rouleau d'extrémité inférieure. Dans cette position, les deux tables arquées 5, 5' sont particulièrement accessibles pour le personnel d'entretien qui n'a donc pas à devoir se glisser à l'intérieur du cadre 50 ou à l'escalader.

De nombreuses améliorations peuvent être apportées à ce dispositif de chauffage dans le cadre de cette invention.

## Revendications

1. Dispositif de chauffage de laize au sein d'une station d'encollage dans une machine de fabrication de carton ondulé, constitué de tables arquées formées d'une série de tubes horizontaux de section carrée et accolés côte à côte, ces tubes (10) étant reliés entre eux en leurs extrémités par des conduits de renvoi (11) de façon à ne former qu'un canal pour le passage de vapeur d'eau à haute température (A-B), caractérisé en ce qu'il comprend deux tables arquées (15, 15') montées en alignement l'une au-dessus de l'autre avec leur face convexe orientée respectivement vers le haut et vers le bas pour former, avec deux tambours (14, 14') situés aux extrémités conjointes des tables, une unité de chauffage (5) ayant un volume cylindrique de section ovale aplatie.

2. Dispositif selon la revendication 1, caractérisé en ce que des ouvertures (12) sont ménagées entre les tubes (10) ou une suite de tubes accolés (10), et en ce que l'unité de chauffage ovale (5) est fermée en ses extrémités par deux parois latérales (16) définissant ainsi un espace intérieur mis sous pression par une amenée d'air comprimé (a), cet air s'échappant ensuite par les ouvertures (12).

3. Dispositif selon la revendication 2, caractérisé en ce que l'unité de chauffage ovale (5) est installée obliquement dans un cadre, le grand axe de cette unité faisant un angle compris entre 10 et 80 degrés avec le sens de déplacement horizontal de la laize, une paire verticale de rouleaux de guidage étant disposée en amont proche de l'extrémité haute, la laize passant par-dessus le rouleau inférieur de guidage, par la face inférieure de l'unité de chauffage ovale (5), puis autour du tambour d'extrémité inférieur, puis par la face supérieure, et ensuite autour du rouleau supérieur.

4. Dispositif selon la revendication 3, caractérisé en ce que l'unité de chauffage ovale (5) est installée dans un cadre (55) obliquement, le grand axe de cette unité faisant un angle compris entre 100 et 170 degrés avec le sens de déplacement horizontal de la laize (20), une paire verticale de rouleaux de guidage (21, 22) étant disposée en aval proche de l'extrémité haute, la laize passant autour du rouleau supérieur de guidage (21), par la face supérieure de l'unité de chauffage ovale (5), puis autour du tambour d'extrémité inférieur, puis par la face inférieure, et ensuite par-dessus le rouleau inférieur (22).

5. Dispositif selon la revendication 4, prévu pour le préchauffage de laize (I) en amont de la station d'encollage (2) située à l'entrée de la section double face (3) de la machine de fabrication de carton ondulé, caractérisé en ce que l'unité de chauffage ovale (5) est installée directement dans le cadre amont (55) de la station d'encollage, le tambour inférieur (14') étant monté sur un pivot horizontal (18), le tambour supérieur (14) étant tenu par un vérin sous-jacent (40) en une première position dite "de travail" sensiblement au niveau du premier tambour (24) d'introduction et de guidage de la station d' encollage, ou en une seconde position abaissée dite "d'introduction de laize", le rouleau de guidage supérieur (21') étant alors simultanément déplacé en amont.

6. Dispositif selon la revendication 5, caractérisé en ce que les moyens de fixation de l'unité de chauffage ovale (5) dans le cadre (55) sont démontables pour permettre de sortir cette unité par la face amont de la station d'encollage.

## Claims

1. A web heater at a gluing station in a machine for producing corrugated board, the heater consisting of arcuate tables embodied by a number of square-section horizontal juxtaposed tubes (10) interconnected at their ends by end conduits (11) so as to form a single duct for the passage of high-temperature water vapour (A-B), characterised in that it comprises two arcuate tables (15, 15') disposed in alignment with, and one above, the other with their convex surface facing upwards and downwards respectively to form, with two drums (14, 14') disposed at the joint ends of the tables, a heating unit (5) having a cylindrical volume of flat oval cross-section.

2. A heater according to claim 1, characterised in that there are apertures (12) between the tubes (10) or a sequence of juxtaposed tubes (10) and the oval heater (5) is closed at its ends by two side walls (16) defining an inner chamber pressurised by a supply of compressed air (a), the same then escaping through the apertures (12).

3. A heater according to claim 2, characterised in that the oval heater (5) is mounted obliquely in a frame, the major axis of the heater forming an angle of from 10 to 80° with the direction of horizontal movement of the web, a vertical pair of guide rolls being disposed upstream near the top end, the web passing above the bottom guide roll, over the bottom surface of the heater (5), then around the bottom end drum, then by way of the upper surface and then around the top roll.

4. A heater according to claim 3, characterised in that the heater (5) is mounted obliquely in a frame (55), the major axis of the heater forming an angle of from 100 to 170° with the direction of horizontal movement of the web (20), a vertical pair of guide rolls (21, 22) being disposed downstream near the top end, the web moving around the top guide roll (21), over the top surface of the heater (5), then around the bottom end drum, then by way of the bottom surface and then above the bottom roll (22).

5. A heater according to claim 4 for preheating a web upstream of the gluing station (2), the same being disposed at the entry of the double-side section (3) of the machine for producing corrugated board, characterised in that the oval heater (5) is mounted directly in the frame (55) upstream of the gluing station, the bottom drum (14') being disposed on a horizontal pivot (18), the top drum (14) being retained by a reciprocating actuator (40) below it in a first or operative position substantially at the level of the first feeding and guiding drum (24) of the gluing station or in a second lowered web introduction position, in which latter case the top guide roll (21') is simultaneously moved upstream.

6. A heater according to claim 5, characterised in that the means for securing the oval heater (5) in the frame (55) are demountable so that the heater can be removed by way of the upstream surface of the gluing station.

## Patentansprüche

1. Vorrichtung zum Erwärmen einer Bahn im Inneren einer Klebstoffauftragsstation in einer Maschine zur Herstellung von Wellpappe, welche aus bogenförmigen Tischen gebildet ist, wobei diese Tische von einer Reihe seitlich aneinandergehängter, horizontaler Rohre quadratischen Querschnitts gebildet sind, wobei diese Rohre (10) untereinander an ihren Enden durch Umlenkleitungen (11) verbunden sind, so dass sie einen einzigen Kanal zum Durchtritt von Wasserdampf mit hoher Temperatur (A-B) bilden, dadurch gekennzeichnet, dass sie zwei bogenförmige Tische (15, 15') umfasst, die zueinander ausgerichtet einer über dem anderen angebracht sind, wobei ihre konvexen Flächen nach oben bzw. nach unten weisen, um mit zwei an den miteinander verbundenen Enden der Tische angeordneten Trommeln (14, 14') eine Erwärmungseinheit (5) zu bilden, die ein zylindrisches Volumen mit flachem ovalem Querschnitt aufweist.

2. Vorrichtung nach Anspruch 1, dadurch gekennzeichnet, dass zwischen den Rohren (10) oder einer Folge aneinanderhängender Rohre (10) Öffnungen (12) vorgesehen sind, und dass die ovale Erwärmungseinheit (5) an ihren Enden von zwei Seitenwandungen (16) verschlossen ist und so einen Innenraum festlegt, der von einer Druckluftzufuhr (a) unter Druck gesetzt ist, wobei diese Luft dann durch die Öffnungen (12) entweicht.

3. Vorrichtung nach Anspruch 2, dadurch gekennzeichnet, dass die ovale Erwärmungseinheit (5) in einem Rahmen schräg eingebaut ist, wobei die grosse Achse dieser Einheit mit der horizontalen Verlagerungsrichtung der Bahn einen Winkel von zwischen 10 und 80 Grad bildet, wobei ein vertikales Paar Führungsrollen stromaufwärts in der Nähe des oberen Endes angeordnet ist, wobei die Bahn über die untere Führungsrolle, über die untere Fläche der ovalen Erwärmungseinheit (5), dann um die untere Endtrommel, dann über die obere Fläche und schliesslich um die obere Rolle verläuft.

4. Vorrichtung nach Anspruch 2, dadurch gekennzeichnet, dass die ovale Erwärmungseinheit (5) schräg in einen Rahmen (55) eingebaut ist, wobei die grosse Achse dieser Einheit mit der horizontalen Verlagerungsrichtung der Bahn (20) einen Winkel von zwischen 100 und 170 Grad bildet, wobei ein vertikales Paar Führungsrollen (21, 22) stromabwärts in der Nähe des oberen Endes angeordnet ist, wobei die Bahn um die obere Führungsrolle (21), über die obere Fläche der ovalen Erwärmungseinheit (5), dann um die untere Endtrommel, dann über die untere Fläche und schliesslich über die untere Rolle (22) verläuft.

5. Vorrichtung nach Anspruch 4, welche zum Vorwärmen der Bahn (I) stromaufwärts der am Eingang des doppelseitigen Abschnitts (3) der Maschine zur Herstellung von Wellpappe angeordneten Klebstoffauftragsstation (2) vorgesehen ist, dadurch gekennzeichnet, dass die ovale Erwärmungseinheit (5) direkt in den stromaufwärtigen Rahmen (55) der Klebstoffauftragsstation eingebaut ist, wobei die untere Trommel (14') auf einem horizontalen Schwenklager (18) angebracht ist, wobei die obere Trommel (14) von einem darunterliegenden Kraftgerät (40) in einer ersten sogenannten "Arbeits"-Stellung im wesentlichen im Bereich der ersten Einführungs- und Führungstrommel (24) der Klebstoffauftragsstation oder einer abgesenkten zweiten sogenannten "Bahneinführungs"-Stellung gehalten ist, wobei die obere Führungsrolle (21') dann gleichzeitig stromaufwärts verlagert ist.

6. Vorrichtung nach Anspruch 5, dadurch gekennzeichnet, dass die Mittel zum Befestigen der ovalen Erwärmungseinheit (5) in dem Rahmen (55) demontierbar sind, um das Herausnehmen dieser Einheit an der stromaufwärtigen Seite der Klebstoffauftragsstation zu ermöglichen.
